(19) Europäisches Patentamt
European Patent Office
Office européen des brevets

(11) Numéro de publication: **0 181 266**
**B1**

(12) **FASCICULE DE BREVET EUROPEEN**

(45) Date de publication du fascicule du brevet: **08.08.90**

(51) Int. Cl.$^5$: **B 01 J 20/32,** G 01 N 30/48

(21) Numéro de dépôt: **85402133.4**

(22) Date de dépôt: **06.11.85**

(54) **Procédé de préparation d'une phase stationnaire pour colonne chromatographique, colonne chromatographique ainsi obtenue, et son utilisation.**

(30) Priorité: **06.11.84 FR 8416863**

(43) Date de publication de la demande:
**14.05.86 Bulletin 86/20**

(45) Mention de la délivrance du brevet:
**08.08.90 Bulletin 90/32**

(84) Etats contractants désignés:
**BE DE FR GB IT LU NL**

(56) Documents cités:
**FR-A-2 093 601**
**GB-A-2 074 892**
**US-A-4 324 689**

**JOURNAL OF CHROMATOGRAPHIC SCIENCE, vol. 12, pages 769-778, 12 décembre 1974; R.E. MAJORS: "Studies of siloxane phases bonded to silica gel for use in high performance liquid chromatography"**

(73) Titulaire: **COMPAGNIE DE RAFFINAGE ET DE DISTRIBUTION TOTAL FRANCE**
**84 rue de Villiers**
**F-92300 Levallois Perret (FR)**

(72) Inventeur: **Colin, Jean-Michel**
**20, rue Jules Tellier**
**F-76600 Le Havre (FR)**
Inventeur: **Pradet, Benoît**
**96, Avenue Victor Hugo**
**F-92170 Vanves (FR)**
Inventeur: **Rosset, Robert**
**50, rue de la Tour**
**F-75016 Paris (FR)**
Inventeur: **Vion, Gisèle**
**50, Avenue Youri Gagarine**
**F-76700 Harfleur (FR)**

(74) Mandataire: **Jolly, Jean-Pierre et al**
**Cabinet BROT et JOLLY 83, rue d'Amsterdam**
**F-75008 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**EP 0 181 266 B1**

Courier Press, Leamington Spa, England.

(56) Documents cités:
ANALYTICAL CHEMISTRY, vol. 49, no.14, pages 2306-2310, décembre 1977; S.A. WISE: "Chemically-bounded aminosilane stationary phase for the high-performance liquid chromatographic separation of polynuclear aromatic compounds"

**Description**

L'invention concerne un procédé de préparation d'une phase stationnaire constituée par un gel de silice greffé en vue du remplissage d'une colonne chromatographique destinée à séparer des constituants en phase liquide, comprenant les étapes suivantes:

une désionisation, par agitation de la silice vierge dans un bain acide,

un premier séchage de la silice vierge, par chauffage à une température comprise entre 18 et 200°C, pendant plusieurs heures sous vide,

un premier greffage par des groupements fonctionnels de type amine,

une hydrolyse de ces premiers greffons,

un second séchage de la silice ainsi greffée,

un second greffage par des groupements fonctionnels de type alkyle,

Un procédé de ce type est décrit dans l'article publié dans JOURNAL OF CHROMATOGRAPHIC SCIENCE Vol. 12, pages 769—778, 12 Décembre 1974 de R. E. MAJORS et intitulé "Studies of siloxane phases bonded to silica gel for use in high performance liquid chromatography".

L'invention concerne également une colonne chromatographique remplie avec une telle phase stationnaire, ainsi que l'utilisation qui peut en être faite, notamment pour séparer les constituants d'un pétrole brut, ou de fractions de pétrole brut, au moyen d'une phase mobile, telle que le n-hexane.

Le domaine de l'invention est celui de l'analyse chimique, plus particulièrement celui de la séparation des constituants de mélanges plus ou moins complexes, plus spécifiquement au moyen de la chromatographie en phase liquide.

La chromatographie en phase liquide sur colonne est une des plus anciennes méthodes chromatographiques, mais elle a été relativement peu utilisée jusqu'à ces dernières années, en raison principalement de la lenteur des séparations, du manque de choix des phases stationnaires, et de l'absence de détecteurs. Actuellement, ces obstacles ayant été levés, on connaît un renouveau de cette méthode sous une forme plus moderne sous haute pression.

La chromatographie en phase liquide pouvant être classée en plusieurs variantes selon la nature des phases ou les phénomènes mis en jeu, pour la séparation des constituants, il convient dès lors de préciser ici que l'invention s'intéresse plus précisément à la chromatographie de partage sur phase stationnaire greffée. Selon cette variante, la séparation des espèces est fondée sur leur différence d'interaction avec les molécules diversement fonctionnalisées qui ont été greffées sur un solide convenable, typiquement un gel de silice.

Dans une telle colonne chromatrographique, une phase liquide mobile, dite phase d'élution, progresse au travers de la phase stationnaire constituée par greffage de molécules organiques variées sur un gel de silice. Lesdites molécules organiques sont appelées par la suite greffons.

La rétention différente des espèces chimiques contenues dans la phase mobile par ces greffons, permet de les séparer.

Les principaux greffons sont les suivants:

de amines

$$-(CH_2)_3-NH_2,\ -(CH_2)_3-N(CH_3)_2,\ -(CH_2)_3-NH-(CH_2)_2-CH_3,$$

$$-(CH_2)_3-\underset{\displaystyle CH_3}{\underset{|}{N}}-(CH_2)_3-$$

des diamines

$$-(CH_2)_3-NH(CH_2)_2-NH_2,$$

des nitriles

$$-(CH_2)_n-CN$$

des chaînes alkyles

$$-(CH_2)_n-CH_3$$

des diols

$$-(CH_2)_3-O-CH_2-CH\ OH-CH_2OH$$

etc.

Le procédé de greffage consiste généralement en une réaction de condensation entre les groupements silanols (≡Si—OH) des gels de silice et un chlorosilane, ou un alkoxysilane, selon la réaction suivante:

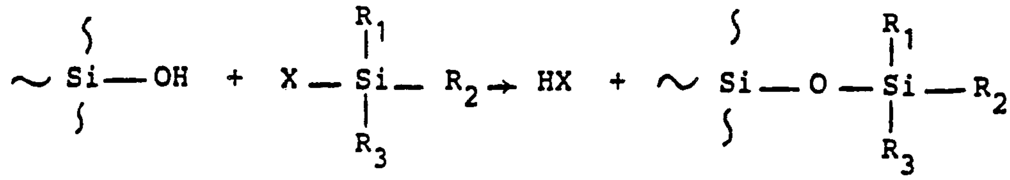

avec

X=Cl (chlorosilane) ou

X=$OCH_3$, $OC_2H_5$ (alkoxysilane).

La chromatographie de partage, dont les possibilités ont été sensiblement accrues par suite de l'utilisation de greffons variés, convient notamment pour la séparation d'espèces homologues ou d'espèces comportant des groupements de nature différente, polaire ou non polaire (et on utilisera alors respectivement la chromatographie de partage classique ou de partage à polarité de phase inversée). Elle présente l'avantage de permettre l'analyse des composés qui sont trop fortement adsorbés sur les gels de silice vierge (chromatographie d'adsorption). La présence et le choix des greffons sont donc des caractéristiques essentielles et déterminantes de la méthode retenue.

La Demanderesse ayant notamment pour but la séparation des constituants (ou de leurs familles) d'un pétrole brut, ou d'une fraction de celui-ci ou des produits issus d'un raffinage de celui-ci, la solubilité des constituants à séparer dans un hydrocarbure (tel que le n-hexane) l'oriente vers le choix de la chromatographie de partage, dont la phase stationnaire est une silice greffée par un groupement fonctionnel du type amine, tel que par exemple un aminopropyle, et dont la phase mobile est un solvant apolaire, tel que le n-hexane.

Au moyen d'une telle colonne chromatographique connue, les solutés sont approximativement élués par ordre de polarité, les constituants les plus polaires sortant de la colonne en dernier. De la sorte, les constituants de type aromatique pur sont plus retenus que ceux de type oléfinique, ou saturés.

Mais, dans le cas d'un pétrole brut, et plus particulièrement avec un pétrole dit lourd, une proportion importante de constituants est formée de noyaux aromatiques plus ou moins substitués par des chaînes alkyles longues, et le comportement de ces molécules complexes vis-à-vis de l'éluant apolaire (n-hexane) ou de la phase stationnaire, présente un caractère intermédiaire entre les constituants de type oléfinique ou saturé et les constituants de type aromatique pur. Leur séparation correcte est donc rendue extrêmement difficile.

L'invention a pour but d'orienter la sélectivité d'une telle colonne chromatographique vis-à-vis des différentes familles d'hydrocarbures présentes dans un produit pétrolier, notamment de séparer les saturés et oléfines, des aromatiques.

Selon la présente invention, le procédé de préparation d'une phase stationnaire de silice, mentionné en préambule, est remarquable en ce que l'hydrolyse desdits premiers greffons s'effectue par un traitement progressif, par agitation de la silice ainsi greffée dans un bain d'hydrofuranne, puis en ce que l'on ajoute progressivement de l'eau dans l'hydrofuranne, enfin en ce que l'on remplace totalement le mélange hydrofuranne eau, par de l'eau.

De la sorte, les greffons présents sur la silice ressortent simultanément:

du type amine, dont la fonction est de retenir les aromatiques (la rétention étant d'autant plus élevée que le constituant contient des noyaux aromatiques),

du type alkyle, dont la fonction est de retenir les aromatiques à chaîne aliphatique longue.

Ainsi, une phase stationnaire comportant des greffons de ces deux types permet à la fois de séparer suffisamment les aromatiques, et de retenir plus longtemps les aromatiques substitués de chaîne aliphatique longues, que ne le font les colonnes selon l'art antérieur.

Selon une réalisation de l'invention, les groupements fonctionnels préalablement greffés sur la silice sont obtenus à partir du n-propyl aminotrichlorosilane, et le second greffon est un alkyl silane et, plus specifiquement, un tri-méthyl-chlorosilane

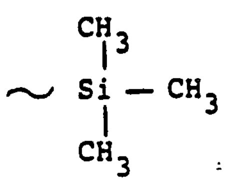

Ce greffon assure une rétention par intersection avec la chaîne hydrocarbonée substituée sur un noyau aromatique.

La description qui va suivre, en regard des dessins annexés, permettra de mieux comprendre comment l'invention s'exécute et se poursuit, et de mieux en apprécier sa portée.

Sur les dessins:

La figure 1 montre une vue en élévation avec arrachement partiel d'une colonne chromatographique d'un type connu;

La figure 2 montre le schéma de principe de la chromatographie en phase liquide;

La figure 3a représente un chromatogramme caractéristique réalisé au moyen d'une colonne d'un type connu, et

La figure 3b représente un chromatogramme réalisé au moyen de la colonne selon l'invention.

La chromatographie de partage permet de séparer les espèces selon leur différence d'interaction entre deux phases non-miscibles; une première phase stationnaire, en l'espèce une silice de synthèse en particules très fines (typiquement 3—10 µm de diamètre nominal) et sur laquelle on est venu greffer des molécules polaires, et une seconde phase mobile, qui est un solvant apolaire. Ce type de chromatographie est dit "de partage classique" par opposition à celle dite "de partage en phase inversée par laquelle la phase mobile est un solvant polaire, et la phase stationnaire apolaire.

Les procédés de préparation des phases stationnaires selon l'art antérieur, consistent généralement à faire réagir en milieu absolument anhydre la silice avec la molécule organique à greffer. Le produit initial est un gel de silice poreuse, de fine granulométrie, caractérisé par la présence de groupements silanols (≡Si—OH) typiquement de l'ordre de 5—OH par $nm^2$.

Ces groupements silanols sont très réactifs et il est possible de greffer sur ces groupements, des molécules organiques variées dites greffons.

Des phases stationnaires diverses sont commercialisées par des firmes telles que Waters, Du Pont, Varian, Merck, etc... sous des appellations commerciales diverses (telles que Micropack, Lichrosorb, ...) et dont la sélectivité par rapport aux différentes espèces chimiques est très variable.

Il est ainsi connu de l'art antérieur, des greffons du type amine, nitrile, alkyle, diol, ... dont les principaux ont été cités en préambule.

Pour des raisons tenant à l'utilisation recherchée (séparation des différentes familles d'un produit pétrolier), la Demanderesse s'est intéressée plus précisément aux phases stationnaires de type alkylamine. Ce greffon est typiquement obtenu par réaction à partir d'un alkylamine trialkoxysilane. Les principales molécules organiques commercialisées sont:

triéthoxysilane du type

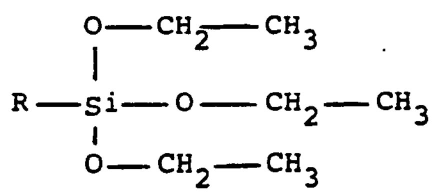

triméthoxysilane du type

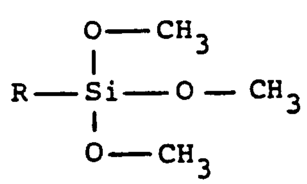

dans lesquelles R représente la fonction alkylamine, sous la forme:

R=N—n-propyl éthylènediamine

$$(—(CH_2)_3—NH—CH_2—CH_2—NH_2)$$

ou

R=n-propylamine

$$(—(CH_2)_3—NH_2)$$

qui sont les deux fonctions usuellement commercialsées. On forme alors, par réaction entre la silice et la molécule à greffer une liaison du type:

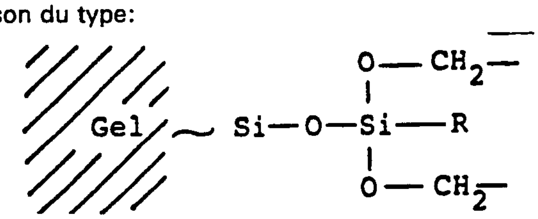

Pour ce faire, la silice vierge est agitée dans un milieu acide, tel qu'un mélange d'acide sulfurique et nitrique, concentré et chaud de manière à éliminer des ions, puis rincée à l'eau, afin qu'elle soit débarrassée des ions minéraux présents à sa surface et qu'elle présente ainsi le plus possible de groupements silanols réactifs. La silice est ensuite séchée, pendant une quinzaine d'heures sous vide à une température comprise entre 160° et 200°C, typiquement à 180°C. Puis, l'on effectue la réaction de silanisation proprement dite: la silice est mise en suspension en présence de l'organosilane choisi, en présence d'un solvant anhydre (tel que le xylène). Selon les conditions opératoires prévues (température, temps de réaction, proportion de réactif . . .), on peut obtenir alors des taux de greffage variés. L'excès de silane est ensuite éliminé par rinçage avec le même solvant anhydre.

Une telle phase staitionnaire, selon l'art antérieur, est disposée dans un colonne chromatographique 10, telle que celle représentée à la figure 1. La colonne est constituée par un tube en acier inoxydable 1 lisse intérieurement, de longueur et de diamètre intérieur variables. La phase stationnaire 2 est immobilisée dans la colonne au moyen d'un disque en acier inoxydable fritté 3, de porosité convenable, pour retenir les particules les plus fines mais sans introduire une perte de charge excessive dans l'installation.

Comme le montre le schéma de principe de la figure 2, on introduit dans un réservoir 11 un solvant A, qui est envoyé, à un e pression relativement élevée (pouvant atteindre plusieurs de bars . . .) par une pompe 12, sur la colonne chromatographique proprement dite 10. Les pompes 12 peuvent être de plusieurs types: à pression constante, telles que les pompes pneumatiques, ou à débit constant telles que les pompes à seringue ou à piston à mouvement alternatif. Un injecteur 13 permet d'introduire l'échantillon à analyser B dans le solvant, généralement au moyen d'une vanne d'échantillonnage. L'ensemble du solvant A et de l'échantillon B forme la phase mobile qui traverse la colonne chromatographique 10, dans laquelle est immobilisée la phase stationnaire. Après passage dans la colonne, la phase mobile est analysée par un détecteur 15 (tel qu'un détecteur à absorption dans l'U.V., ou un réfractomètre différentiel), puis le signal issu du détecteur 15, est enregistré dans un enregistreur 16, auquel on peut adjoindre un intégrateur 17 en vue de la réalisation des analyses quantitatives ou, plus généralement, un système de traitement des données fournies par le détecteur.

Poir de plus amples informations sur l'état de l'art antérieur, on pourra utilement se reporter à l'ouvrage intitulé "Manuel pratique de Chromatographie en phase liquide", 2ème édition, par R. ROSSET, M. CAUDE et A. JARDY, Masson, Paris, 1982.

L'efficacité de telles colonnes chromatographiques selon l'art antérieur se mesure d'une façon quantitative, par la résolution obtenur entre les différentes familles chimiques qu'elles permettent de séparer.

Ainsi qu'il a été indiqué en préambule du présent mémoire, les aromatiques présents dans les produits pétrolieurs peuvent présenter un caractère intermédiaire, entre le caractère purement aromatique et le caractère aliphatique. Dans ce cas, les colonnes chromatographiques selon l'art antérieur ne peuvent pas séparer suffisamment ces constituants, qui sont élués en même temps que les oléfines simples et les saturés.

Conformément à la présente invention, l'hydrolyse desdits premiers greffons s'effectue par un traitement progressif, par agitation de la silice ainsi greffée dans un bain d'hydrofuranne. On ajoute ensuite progressivement de l'eau dans l'hydrofuranne et enfin on remplace totalement le mélange hydrofuranne-eau par de l'eau.

Un second greffage est donc effectué, qui concerne notamment les groupements —OH libérés sur la greffe aminopropyle par hydrolyse, conformément à la réaction suivante:

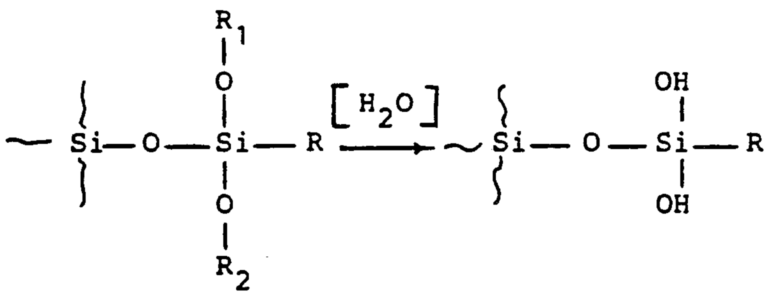


où $R_1$ et $R_2$ sont des groupements $—CH_3$, —OCl ou $—O—C_2H_5$. Cette interprétation est donnée ici à titre purement explicatif, sans qu'on puisse y trouver une quelconque limitation aux droits de la Demanderesse, si elle ne s'avérait pas entièrement exacte. Pour ce faire, une étape d'hydrolyse est nécessaire entre le premier greffage de la fonction amine et le greffage alkyle ultérieur.

Ce second greffage permet ainsi d'obtenir une phase stationnaire bi-fonctionnelle, assurant respectivement la rétention des aromatiques purs et celle des aromatiques à chaîne aliphatique longue.

Ainsi, en jouant sur le taux de greffage de ces deux sortes de greffons, on obtient une phase stationnaire qui sépare suffisamment les aromatiques des saturés et qui retient suffisamment les aromatiques à chaînes aliphatiques longues.

En outre, il faut noter ici que l'invention susdécrite n'est pas une simple juxtaposition de moyens

connus antérieurement, mais une véritable combinaison, présentant un effet de synergie. En effet, le mélange de deux phases stationnaires greffées respectivement l'un aminopropyle, l'autre alkyle, ne permet pas de séparer les saturés et oléfines, des aromatiques a` longue chaîne. Il y a donc un effet nouveau dû au greffage sur une même silice de deux greffons de type différents, notamment l'un sur l'autre.

Les chromatogrammes caractéristiques représentés aux figures 3a et 3b ont été réalisés en utilisant comme solvant d'élution le n-hexane et comme détecteur un spectrophotomètre U.V. calé à 210 mm. Le débit est de 1 ml. $min^{-1}$.

L'axe des abcisses X représente le signal du détecteur (unité arbitraire). L'axe des ordonnées Y représente le temps de rétention (unité = 1 cm ≃ 1 minute). On observe nettement la séparation des espèces chimiques de type saturé (pic S) et de type monoaromatique (épaulement A) sur la figure 3a. Les espèces de type monoaromatique viennent se regrouper avec les polyaromatiques (pic B') sur la figure 3b.

Selon un mode de réalisation préfére de l'invention, les groupements fonctionnels antérieurement greffés sur la silice vierge sont obtenus par réaction avec du n-propylamino-triéthoxysilane et, après hydrolyse telle que décrite ci-dessus et un second séchage dans les mêmes conditions que le premier séchage, le groupement fonctionnel ultérieurement greffé obtenu par réaction est un tri-méthyl chlorosilane.

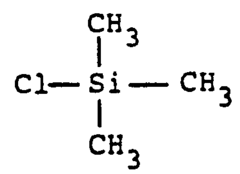

En effet, l'inconvénient majeur des colonnes chromatographiques selon l'art antérieur est de ne pas retenir suffisamment les aromatiques à chaîne(s) aliphatique(s) longue(s).

L'objectif recherché est donc d'augmenter l'affinité de ces constituants pour la phase stationnaire, et le moyen retenue consiste à greffer sur cette phase des greffons de type apolaire, tels que des alkyles, dont les plus simples d'entre eux sont les méthyles. Ce groupement est en général apporté sous la forme d'un tri-méthylchlorosilane (TMCS), dilué dans du xylène, d'une manière quelque peu analogue au procédé de greffage décrit ci-dessus. Le mélange silice greffé-xylène-TMCS est agité pendant près de quinze heures, à une température comprise entre 120 et 150°C, et préférentiellement à 140°C, dans un ballon. Après réaction, on rince la silice avec du xylène sec, en filtrant sur verre fritté.

Le temps de réaction dépend en fait du taux de greffage désiré, et également du taux de greffage antérieur obtenu. On souhaite en général atteindre le taux de greffage maximum. Afin de faciliter ce second greffage, la Demanderesse a noté que la présence de traces d'eau résiduelles après le second séchage facilitait l'accrochage des seconds greffages. Mais afin d'obtenir des conditions de préparation de phases reproductibles, il n'était pas convenable de laisser des traces d'eau présentes dans la phase stationnaire, mais il était préférable de sécher très énergiquement la silice ainsi greffée et hydrolysée, puis de réintroduire quelques traces d'eau, comprises entre 0,1 et 1% en poids par rapport à la silice.

Ce procédé introduit un progrès technique considérable par rapport aux procédés connus, notamment celui décrit dans l'article du Journal of Chromatographic Science mentionné précédemment, car il n'est pas connu dans ce procédé de laisser des traces d'eau résiduelle après le séchage.

Ainsi, les colonnes chromatographiques selon la présente invention, obtenues par remplissage à partir d'une phase stationnaire doublement greffée, présentent une sélectivité accrue, notamment dans leur utilisation en vue de séparer des constituants chimiques d'un pétrole brut, ou d'une fraction de pétrole brut.

En outre, elles présentent une très faible sensibilité au taux d'humidité, puisque tous les groupements silanols accessibles sont supprimés ou très fortement réduits par le double greffage ainsi effectué; enfin, les solutés polaires ne sont pas irréversiblement retenus pour les mêmes raisons. Les colonnes chromatographiques selon la présente invention sont donc également plus faciles d'emploi et de contrôle, et sont aisément reproductibles par l'homme de l'art qui suit les enseignements du présent mémoire.

**Revendications**

1. Procédé de préparation d'une phase stationnaire à base de silice, en vue du remplissage d'une colonne chromatographique destinée à séparer des constituants en phase liquide, comprenant les étapes suivantes:

une désionisation, par agitation de la silice vierge dans un bain acide,

un premier séchage de la silice vierge par chauffage à une température comprise entre 160 et 200°C, pendant plusieurs heures sous vide,

un premier greffage par des groupements fonctionnels de type amine,

une hydrolyse de ces premiers greffons,

un second séchage de a silice ainsi greffée,

un second greffage par des groupements fonctionnels de type alkyle, caractérisé en ce que l'hydrolyse

desdits premiers greffons s'effectue par un traitement progressif, par agitation de la silice ainsi greffée dans un bain d'hydrofuranne, puis en ce que l'on ajoute progressivement de l'eau dans l'hydrofuranne, enfin en ce que l'on remplace totalement le mélange hydrofuranne-eau, par de l'eau.

2. Procédé de préparation d'une phase stationnaire de silice selon la revendication 1, caractérisé en ce que le second séchage s'effectue par chauffage à une température comprise entre 160°C et 200°C pendant plusieurs heures sous vide, de façon à éviter toute trace d'eau, puis en ce que l'on ré-introduit de façon contrôlée quelques traces d'eau, comprises entre 0,1 à 1% en poids par rapport à la silice, après le second séchage, de façon à faciliter le second greffage.

3. Phases stationnaires, obtenues par la mise en oeuvre du procédé selon l'une des revendications 1 et 2.

4. Phase stationnaire selon la revendication 3, caractérisée en ce que les premiers greffons sont obtenus sur la silice vierge par réaction avec du n-propylamino triethoxysilane, et en ce que les seconds greffons sont du tri-methyl chlorosilane.

5. Colonne chromatographique comportant une phase stationnaire préparée par le procédé selon l'une des revendications 1 et 2.

6. Utilisation d'une colonne chromatographique selon la revendication 5, en vue de la séparation des constituants d'un produit pétrolier au moyen d'une phase mobile telle que le n-hexane.

**Patentansprüche**

1. Verfahren zur Herstellung einer stationären Phase auf Kieselerdebasis als Füllung für eine chromatographische Säule zur Trennung von Bestandteilen in flüssiger Phase, welches die folgenden Schritte umfaßt:

ein Desionisieren der jungfräulichen Kieselerde durch Bewegung in einem Säurebad,

ein erstes Trocknen der jungfraülichen Kieselerde durch Erwärmung auf eine Temperatur zwischen 160°C und 200°C während mehrerer Stunden im Vakuum,

ein erstes Pfropfen mit funktionellen Gruppen vom Amintyp,

eine Hydrolyse dieser ersten Pfropfen,

ein zweites Trocknen der so gepfropften Kieselerde und

ein zweites Pfropfen mit funktionellen Gruppen vom Alkyltyp,

dadurch gekennzeichnet, daß die Hydrolyse der ersten Pfropfen im Wege einer progressiven Behandlung durch Bewegung der so gepfropften Kieselerde in einem Hydrofuranbad erfolgt, wonach dem Hydrofuran progressiv Wasser zugegeben und schließlich das Hydrofuran/Wasser-Gemisch vollständig durch Wasser ersetzt wird.

2. Verfahren nach Anspruch 1, dadurch gekennzeichnet, daß das zweite Trocknen durch Erwärmung auf eine Temperatur zwischen 160°C und 200°C während mehrere Stunden im Vakuum erfolgt, um jede Spur von Wasser zu vermeiden, wonach zwischen 0,1 und 1 Gewichtsprozent Wasser, bezogen auf die Kieselerde, wieder gesteuert eingeführt wird, um das zweite Pfropfen zu erleichtern.

3. Stationäre Phase, hergestellt nach dem Verfahren gemäß Anspruch 1 oder 2.

4. Stationäre Phase nach Anspruch 3, dadurch gekennzeichnet, daß die ersten Pfropfen auf der jungfräulichen Kieselerde durch Reaktion mit n-Propylamino-triäthoxysilan erhalten worden sind und die zweiten Pfropfen von Trimethyl-chlorsilan herrühren.

5. Chromatographische Säule mit einer nach dem Verfahren gemäß Anspruch 1 oder 2 hergestellten stationären Phase.

6. Verwendung der chromatographischen Säule nach Anspruch 5 zur Trennung der Bestandteile eines Erdölproduktes mittels einer beweglichen Phase, wie n-Hexan.

**Claims**

1. A method of preparing a silica-based stationary phase for filling a chromatographic column intended to separate the components in liquid phase, comprising the following stages:

deionisation, by agitating pure silica in an acid bath,

an initial drying of the pure silica by heating it to a temperature of between 160 and 200°C, for several hours under vacuum,

an initial grafting by functional groups of amine type,

hydrolysis of these initial grafts,

a second drying of the silica thus grafted,

a second grafting by functional groups of alkyl type, characterised in that the hydrolysis of said initial grafts is carried out by a gradual treatment, by agitating the silica thus grafted in a bath of hydrofuran, in that water is gradually added to the hydrofuran and, finally, in that the hydrofuran-water mixture is replaced entirely with water.

2. A method of preparing a silica stationary phase according to claim 1, characterised in that the second drying takes place by heating to a temperature of between 160 and 200°C for several hours under vacuum, so as to eliminate any traces of water, in that some traces of water, of between 0.1 to 1% by weight in

relation to the silica, are re-introduced in a controlled manner after the second drying so as to facilitate the second grafting.

3. Stationary phases obtained by carrying out the method according to either of claims 1 and 2.

4. A stationary phase according to claim 3, characterised in that the initial grafts are obtained on the pure silica by reaction with n-propylamino triethoxysilane, and in that the second grafts are of trimethyl chlorosilane.

5. A chromatographic column comprising a stationary phase prepared by the method according to either of claims 1 and 2.

6. Use of a chromatographic column according to claim 5, for separating the components of a petroleum product by means of a mobile phase, such as n-hexane.

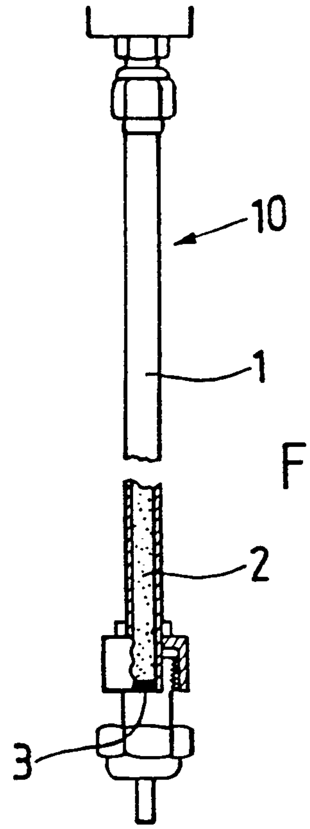


FIG.1

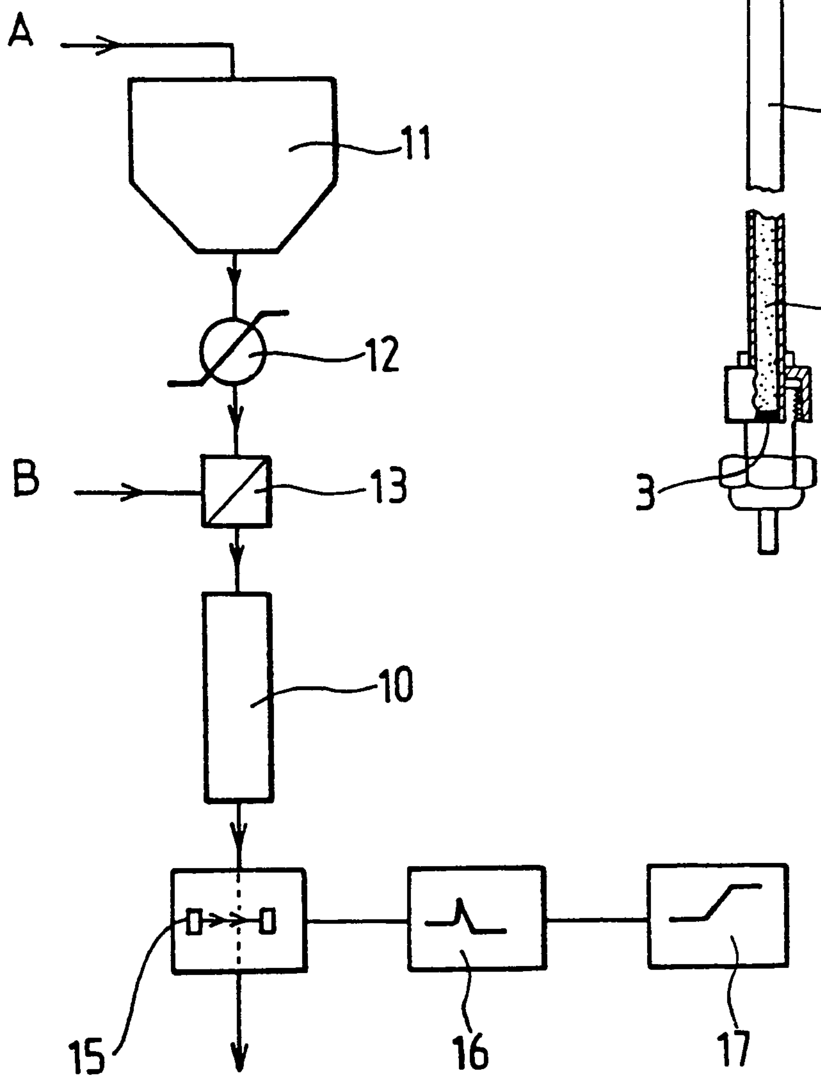


FIG.2

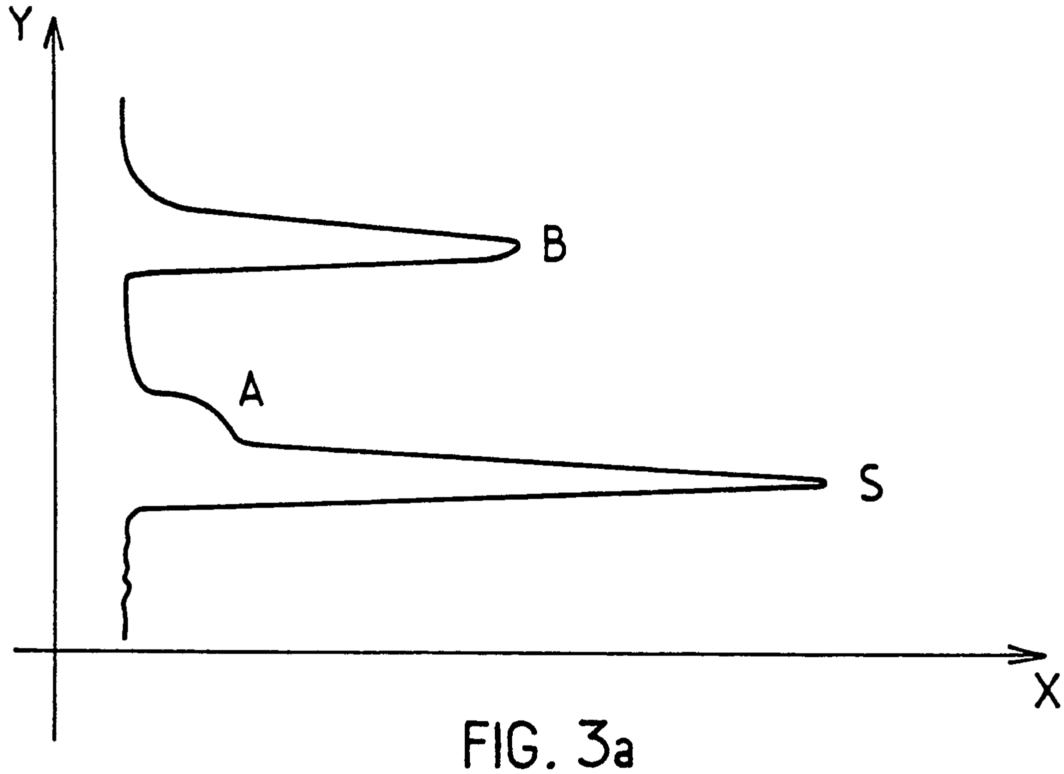


FIG. 3a

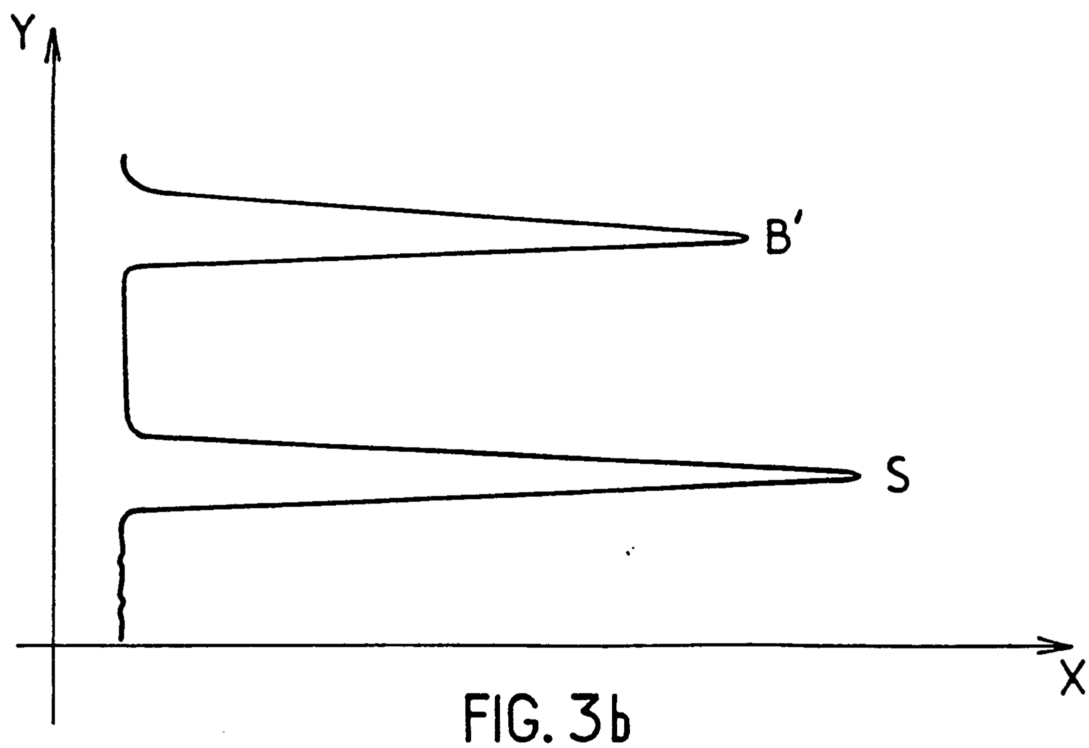


FIG. 3b